# EUROPÄISCHE PATENTSCHRIFT

(11) **EP 3 250 483 B1**
(45) Veröffentlichungstag und Bekanntmachung des Hinweises auf die Patenterteilung: **13.10.2021**
(21) Anmeldenummer: 16703077.4
(22) Anmeldetag: 28.01.2016
(51) Int. Cl.: B65G 1/137, B65G 29/00, B65G 47/53, B65G 47/80

(54) **KOMMISSIONIERVORRICHTUNG IN FORM EINES DREHTISCHES**
PICKING DEVICE IN THE FORM OF A ROTARY TABLE
DISPOSITIF DE PRÉPARATION DE COMMANDES SE PRÉSENTANT SOUS LA FORME D'UNE TABLE TOURNANTE

(30) Priorität: 29.01.2015 DE 102015201565
(43) Veröffentlichungstag der Anmeldung: 06.12.2017
(73) Patentinhaber: Kardex Produktion Deutschland GmbH, 86476 Neuburg/Kammel (DE)
(72) Erfinder: BOUCHÉ, Norbert, 76829 Landau (DE); SCHNATTERER, Jürgen, 76751 Jockgrim (DE); SPEYERER, Christoph, 76865 Insheim (DE)
(74) Vertreter: Grünecker Patent- und Rechtsanwälte PartG mbB
(86) Internationale Anmeldenummer: PCT/EP2016/051790
(87) Internationale Veröffentlichungsnummer: WO 2016/120375

(56) Entgegenhaltungen:
- WO-A1-2005/016796
- WO-A1-2012/026824
- WO-A2-2004/069433
- DE-A1- 3 929 724
- DE-A1-102013 210 196
- JP-A- 2001 002 239
- US-A- 4 003 461
- US-A- 4 031 998
- US-A1- 2014 288 696
- US-B1- 6 854 815

## Beschreibung

Die Erfindung betrifft eine Kommissioniervorrichtung zur Anordnung zwischen wenigstens einer automatischen Bestückungsstelle und wenigstens einem Kommissionierungsarbeitsplatz, mit einer entlang eines Verfahrweges von dem Kommissionierungsarbeitsplatz zu der Bestückungsstelle hin beweglichen Behälterhalterung, und mit einer Rotationseinrichtung zur Bewegung der wenigstens einen Behälterhalterung entlang des Verfahrweges, wobei die Kommissioniervorrichtung eine Kippvorrichtung für die wenigstens eine Behälterhalterung aufweist, durch die die wenigstens eine Behälterhalterung bei einer Bewegung entlang des Verfahrweges zum wenigstens einen Kommissionierungsarbeitsplatz hin kippbar ist, wobei die Kippvorrichtung eine mechanische Führung für die wenigstens eine Behälterhalterung entlang des Verfahrweges aufweist, und dass der Verfahrweg in sich geschlossen ist, und wobei die Kippvorrichtung eine Zwangsführung für die wenigstens eine Behälterhalterung aufweist, die den Verfahrweg für die wenigstens eine Behälterhalterung vorgibt und durch die die Kippbewegung der wenigstens einen Behälterhalterung bei einer Rotation der Rotationseinrichtung auslösbar ist.

Kommissioniervorrichtungen sind im Stand der Technik bekannt. Sie können dazu dienen, eine Behälterhalterung von einer Bestückungsstelle zu einem Kommissionierungsarbeitsplatz und zurück zu bewegen. Die automatische Bestückungsstelle kann Teil eines automatischen Lagersystems oder mit einem solchen verbunden sein. Der Kommissionierungsarbeitsplatz kann dem Zugriff auf die Behälterhalterung bzw. einem darin gehaltenen Behälter durch wenigstens eine Bedienperson oder durch ein weiteres automatisches System dienen. Um eine schnelle Bewegung der wenigstens einen Behälterhalterung zwischen der Bestückungsstelle und dem Kommissionierungsarbeitsplatz zu erlauben, können Kommissionierungsvorrichtungen Rotationseinrichtungen aufweisen, welche wenigstens eine Behälterhalterung durch eine Drehbewegung zwischen der Bestückungsstelle und dem Kommissionierungsarbeitsplatz bewegen können. Beispielsweise zeigt die DE 39 29 724 C2 ein Artikellagerungs- und Ausgabegerät mit einem Drehtisch. Der Drehtisch erlaubt einen schnellen Transport zwischen einer Einlagerungs- und Entnahmemaschine und einer Entnahmestation. Von Nachteil ist dabei jedoch, dass der Zugriff durch eine Bedienperson auf den Inhalt der Behälter umständlich ist, wodurch lange Kommissionierungszeiten verursacht und bei längerer Bedienung unter Umständen gesundheitlichen Schäden hervorgerufen werden können. Ein Drehtisch mit verkippbaren Behälterhalterungen ist aus der JP 2001 002239 A bekannt. Hier werden Behälterhalterungen mittels einer Hydraulik gekippt. Aus der WO 2005/01679 6 A1 ist ein Umlaufsystem für Lagerregale bekannt, bei dem die Regale an einer Entnahmestation gekippt werden können. In der US 6854 815B1 ist ein Gehäuse für ein Umlaufregal beschrieben, in dem die Regalböden nach vorne hin kippbar aufgehängt sind.

Aus der WO 2004/069433 A2 ist eine Kommissioniervorrichtung nach dem Oberbegriff des Anspruchs 1 bekannt. Das Dokument zeigt eine Vorrichtung in Form eines Drehtisches mit kippbaren Halterungen bekannt. Die Halterungen sind mit Rollen versehen. Mittels der Rollen können die Halterungen auf einer Bahn bewegt werden. Zum Auslösen einer Verkippung ist jede Halterung mit einer zusätzlichen Rolle versehen, die auf eine Rampe gefahren werden kann, um angehoben zu werden.

Es ist also Aufgabe der Erfindung, eine Kommissioniervorrichtung der oben genannten Art bereit zu stellen, die einen einfachen Zugriff an wenigstens einem Kommissionierungsarbeitsplatz auf die wenigstens eine Behälterhalterung bzw. auf einen in der wenigstens einen Behälterhalterung gehaltenen Behälter ermöglicht und dadurch sowohl gesundheitliche Risiken für eine Bedienperson minimiert und einen schnellen Zugriff auf die wenigstens eine Behälterhalterung erlaubt.

Diese Aufgabe wird für eine Kommissioniervorrichtung der eingangs genannten Art dadurch gelöst, dass die wenigstens eine Behälterhalterung eine Kippachse aufweist, die horizontal von der mechanischen Führung beabstandet ist.

Die erfindungsgemäße Lösung bietet mehrere Vorteile gegenüber bekannten Kommissioniervorrichtungen. Zunächst ist eine Kippung der wenigstens einen Behälterhalterung zum Kommissionierungsarbeitsplatz hin vorteilhaft, da eine Bedienperson die Behälterhalterung leichter erreichen kann. Dadurch kann die Kommissionierung zum einen schneller erfolgen und zum anderen die gesundheitliche Belastung für die Bedienperson abnehmen. Ein weiterer Vorteil der erfindungsgemäßen Lösung ist der, dass die Kippvorrichtung derart ausgestaltet ist, dass die Behälterhalterung durch die Bewegung entlang des Verfahrweges zum Kommissionierungsarbeitsplatz hin kippbar ist. Die wenigstens eine Behälterhalterung wird also während der Bewegung entlang des Verfahrweges gekippt. Verfahren und Kippen können also in einer einzigen Bewegung ausgeführt werden. Dies kann wesentlich zeitsparender sein als eine serielle Abfolge von Verfahren und Kippen. Auch ist ein manuelles Kippen durch die Bedienperson nicht erforderlich.

Die mechanische Führung kann für eine sichere Bewegung der wenigstens einen Behälterhalterung entlang des Verfahrweges sorgen. Zudem kann die mechanische Führung selbst die wenigstens eine Behälterhalterung bei einer Bewegung entlang des Verfahrweges zum wenigstens einen Kommissionierungsarbeitsplatz hin kippen.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Der Verfahrweg für die wenigstens eine Behälterhalterung ist bevorzugt durchgängig. Besonders bevorzugt ist der Verfahrweg kreisförmig und erstreckt sich um einen Vollkreis. So kann die wenigstens eine Behälterhalterung zu jeder gewünschten Position entlang des Verfahrweges bewegt werden, unabhängig davon, ob eine Rotation im Uhrzeigersinn oder entgegengesetzt stattfindet.

Um die wenigstens eine Behälterhalterung sicher entlang des Verfahrweges zu führen, können wenigstens zwei Behälterhalterungen bezüglich einer Verschiebung entlang des Verfahrweges bewegungsstarr miteinander gekoppelt sein. Die Kippbewegungen der einzelnen Behälterhalterungen ist dabei bevorzugt trotzdem möglich. Die wenigstens eine Behälterhalterung kann dann entlang des Verfahrweges bewegt und durch die Kippvorrichtung gekippt werden, eine Verschiebung der wenigstens einen Behälterhalterung entlang einer Richtung senkrecht zum Verfahrweg wird jedoch verhindert.

Um die durch die Bewegung der wenigstens einen Behälterhalterung entlang des Verfahrweges hervorgerufene Kippung der wenigstens einen Behälterhalterung möglichst einfach umzusetzen, weist die Kippvorrichtung eine Zwangsführung für die Behälterhalterung auf, die die Kippbewegung der wenigstens einen Behälterhalterung bei einer Rotation der Rotationsvorrichtung auslöst. Die Kippvorrichtung löst eine zwangsgeführte Kippbewegung wenigstens einer Behälterhalterung aus.

Die wenigstens eine Behälterhalterung kann wenigstens zwei Rollen aufweisen, die auf gegenüberliegenden Seiten der mechanischen Führung angeordnet sind. Die mechanische Führung kann auch als Schienensystem ausgelegt sein, wobei geeignete rollbare Gegenstücke an der wenigstens einen Behälterhalterung vorhanden sein können, welche durch die Schienen führbar sind. Die Zwangsführung übernimmt gleichzeitig mehrere Aufgaben. Erstens gibt sie den Verfahrweg für die wenigstens eine Behälterhalterung vor. Zweitens löst sie die Kippbewegung der wenigstens einen Behälterhalterung aus bzw. führt sie die Behälterhalterung zu einer Kippbewegung. Des Weiteren kann die Zwangsführung für die Bewegungsstarrheit sorgen, so dass die wenigstens eine Behälterhalterung sich entlang des Verfahrweges bewegen kann und dabei kippbar ist, anderen Bewegungen jedoch unterbunden werden. Besonders einfach lässt sich die Zwangsführung erreichen, wenn die Behälterhalterung wenigstens zwei sich vertikal gegenüberliegende Rollen aufweist, zwischen denen eine mechanische Führung angeordnet ist.

Um die Kippbewegung der wenigstens einen Behältervorrichtung reproduzierbar zu definieren, kann entlang des Verfahrweges eine Kurvensteuerung für die Erzeugung der Kippbewegung der wenigstens einen Behälterhalterung vorhanden sein. Die Kurvensteuerung kann insbesondere Teil der Kippvorrichtung sein. Die Kurvensteuerung ist bevorzugt durch die Zwangsführung gebildet. Wenigstens eine Behälterhalterung kann beispielsweise mechanisch in Eingriff mit der Kurvensteuerung sein.

Die wenigstens eine Behälterhalterung weist eine Kippachse auf, die von der mechanischen Führung der Kippvorrichtung beabstandet ist. Die mechanische Führung ist dabei horizontal von der Kippachse beabstandet. Ändert dann die mechanische Führung ihre Position relativ zur Kippachse, so kann die wenigstens eine Behälterhalterung dieser Positionsänderung folgen, indem die Behälterhalterung um die Kippachse gekippt wird.

Eine besonders kompakte Bauform der erfindungsgemäßen Kommissioniervorrichtung kann dadurch erhalten werden, dass die Kippachse der wenigstens einen Behälterhalterung im mittleren Bereich der Behälterhalterung angeordnet ist. Die Kippvorrichtung kann dann an einer von dem mittleren Bereich der Behälterhalterung beabstandeten Randbereich der Behälterhalterung angeordnet sein. Weist die wenigstens eine Behälterhalterung beispielsweise Rollen auf, welche mit einer mechanischen Führung in Verbindung stehen, so können die Rollen an einer Außenseite der wenigstens einen Behälterhalterung angeordnet sein. Die Anordnung der Kippachse im mittleren Bereich der Behälterhalterung sorgt auch für eine vorteilhafte Balance der wenigstens einen Behälterhalterung, insbesondere wenn diese schwer beladen ist. Besonders bevorzugt ist die wenigstens eine Behälterhalterung im Bereich der Kippachse an der übrigen Kommissioniervorrichtung gehalten.

Eine besonders einfach aufgebaute Kommissioniervorrichtung kann dadurch erhalten werden, dass eine vertikale Position der Kippachse bei einer Bewegung der Behälterhalterung entlang des Verfahrweges unveränderlich ist. Die Kippachse kann also bei einer Rotation der Rotationseinrichtung entlang einer horizontalen Ebene bewegt werden, während die Kippvorrichtung die wenigstens eine Behälterhalterung um die Kippachse kippen kann. Weist die Kommissioniervorrichtung eine mechanische Führung auf, und ist diese von der Kippachse beabstandet, so bestimmt die Veränderung des Abstandes zwischen mechanischer Führung und Kippachse entlang des Verfahrweges das Ausmaß der Kippung der wenigstens einen Behälterhalterung. Die Kippachse ist horizontal von der mechanischen Führung beabstandet.

Dann bestimmt die vertikale Position der Kippachse relativ zu der Führung das Ausmaß der Kippung.

Um eine erfindungsgemäße Kommissioniervorrichtung besonders einfach zu gestalten, kann die wenigstens eine Behälterhalterung kippbar von einem Drehtisch der Rotationseinrichtung gehalten sein. Der Drehtisch kann insbesondere eine vertikale Drehachse aufweisen, so dass die Kippachse der wenigstens einen Behälterhalterung auch bei einer Rotation der Rotationseinrichtung bzw. des Drehtisches stets auf der gleichen Höhe bleibt. Um die Kommissioniervorrichtung besonders kompakt zu gestalten, kann eine mechanische Führung der Kippvorrichtung unterhalb des Drehtisches angeordnet sein. Weist die Kommissioniervorrichtung zwei Behälterhalterungen auf, so sind deren Kippachsen bevorzugt parallel zueinander und auf gegenüberliegenden Seiten der vertikalen Drehtischachse angeordnet. Weist die Kommissioniervorrichtung mehr als eine Behälterhalterung auf, sind die Kippachsen aller Behälterhalterungen bevorzugt auf derselben Höhe angeordnet.

Um eine mechanische Führung möglichst einfach zu gestalten und um die Verkippung der wenigstens einen Behälterhalterung entlang des Verfahrweges gleichmäßig zu halten, kann die mechanische Führung wenigstens abschnittsweise entlang einer schiefen Ebene ausgerichtet sein.

Um das Ausmaß der Kippung der wenigstens einen Behälterhalterung für verschiedene Anforderungen anzupassen, kann ein Verstellmechanismus vorgesehen sein, durch den eine Neigung der schiefen Ebene verstellbar ist.

Um eine besonders einfach aufgebaute mechanische Führung zu erhalten, kann die mechanische Führung band- oder scheibenförmig sein, wobei Flachseiten der mechanischen Führung im Wesentlichen horizontal ausgerichtet sind. Im Wesentlichen horizontal soll dabei mit Ausnahme einer Schräglage oder schrägen Abschnitten zur Erzeugung der Kippbewegung der wenigstens einen Behälterhalterung bedeuten.

Weist die wenigstens eine Behälterhalterung Rollen auf, so kann die mechanische Führung eine Laufbahn für die Rollen ausbilden. Bevorzugt sind wenigstens zwei Rollen vorhanden, von denen jeweils eine oberhalb und eine unterhalb der Führung angeordnet ist. Die durch die mechanische Führung gebildeten Laufbahnen sind bevorzugt unterbrechungsfrei, so dass glatte Laufbahnen für die Rollen gebildet sind.

Die Führung kann insbesondere durch eine Ringscheibe gebildet sein, deren Flachseiten entlang einer schiefen Ebene ausgerichtet sind. Durch die Öffnung der Ringscheibe können Teile der Rotationsvorrichtung ragen.

Die Kommissioniervorrichtung kann wenigstens zwei Behälterhalterungen aufweisen. Dies ist besonders vorteilhaft, da eine der wenigstens zwei Behälterhalterungen eine Position am Kommissionierungsarbeitsplatz einnehmen kann, so dass eine Bedienperson den Inhalt eines in der Behälterhalterung gehaltenen Behälters kommissionieren kann, während die zweite Behälterhalterung zur Bestückungsstelle weist, so dass ein Austausch von Gütern oder Behältern durch die automatische Bestückungsstelle erfolgen kann. Weist die erfindungsgemäße Kommissionier-vorrichtung zwei Behälterhalterungen auf, so sind diese bevorzugt auf zwei sich gegenüberliegenden Seiten der Rotationseinrichtung angeordnet, wobei eine vertikale Achse der Rotationseinrichtung bevorzugt zwischen den beiden Behälterhalterungen angeordnet ist.

Die Kommissioniervorrichtung kann auch mehr als zwei Behälterhalterungen aufweisen. Auf diese Weise können beispielsweise mehr als eine Bestückungsstelle oder mehr als ein Kommissionierungsarbeitsplatz an der Kommissioniervorrichtung angeordnet sein. Zudem ist es möglich, dass Transporteinrichtungen für Behälter vorhanden sind, welche zusätzlich zur wenigstens einen Bestückungsstelle und dem wenigstens einen Kommissionierungsarbeitsplatz mit der Kommissioniervorrichtung in Verbindung stehen können, so dass Behälter mit einer Behälterhalterung, welche nicht an der wenigstens einen Bestückungsstelle oder dem wenigstens einen Kommissionierungsarbeitsplatz angeordnet sind, von der Kommissioniervorrichtung auf die Transporteinrichtung bewegt werden, oder dass Behälter von wenigstens einer Transporteinrichtung auf eine Behälterhalterung bewegt werden, während weitere Behälterhalterungen an der wenigstens einen Bestückungsstelle und/oder an dem wenigstens einen Kommissionierungsarbeitsplatz positioniert sind.

Um die Sicherheit für eine Bedienperson zu erhöhen und um Störungen der Kommissioniereinrichtung zu vermeiden, kann ein Gehäuse vorhanden sein, das nur im Bereich des Kommissionierungsarbeitsplatzes den Zugriff auf einen in der Behälterhalterung gehaltenen Behälter durch eine Zugriffsöffnung freigibt.

Das Gehäuse kann eine Auslösevorrichtung zum Anhalten der wenigstens einen Behälterhalterung aufweisen, wobei die Auslösevorrichtung wenigstens einen Alarmgeber in Form einer Sensoranordnung aufweist, der einen Auslösebereich überwacht. Der Auslösebereich kann wenigstens einen Rand der Zugriffsöffnung umfassen. In dem Auslösebereich kann eine Bewegung in der Zugriffsöffnung bzw. ein nicht gewünschtes Eindringen eines Objektes in die Zugriffsöffnung detektiert werden. Der Alarmgeber kann ein Stoppsignal zum Anhalten der Rotationseinrichtung erzeugen. Durch die Auslösevorrichtung soll insbesondere das Einklemmen einer Hand der Bedienperson zwischen der Behälterhalterung oder einem in der Behälterhalterung gehaltenen Behälter und dem Gehäuse verhindert werden.

Um eine besonders einfach aufgebaute Auslösevorrichtung zu erhalten, kann die wenigstens eine Auslösevorrichtung wenigstens einen verschieblichen Alarmgeber aufweisen. Gelangt ein Objekt wie beispielsweise eine Hand zwischen den verschieblichen Alarmgebern und eine Behälterhalterung oder einen in der Behälterhalterung gehaltenen Behälter, so kann die Bewegung der Behälterhalterung das Objekt bei einem Verfahren entlang des Verfahrweges gegen den verschieblichen Alarmgeber drücken. Dadurch wird der verschiebliche Alarmgeber verschoben und es kann ein Stoppsignal durch die Auslösevorrichtung erzeugt werden.

Der verschiebliche Alarmgeber ist bevorzugt als ein Rahmen ausgeführt, welcher die Zugriffsöffnung umgibt. Der Rahmen deckt dann den Auslösebereich ab. Alternativ dazu kann auch in den Randbereichen der Zugriffsöffnung eine Lichtschranke vorhanden sein, welche ein Objekt in der Zugriffsöffnung detektieren kann.

Alternativ oder zusätzlich kann ein Lichtgitter unterhalb der Zugriffsöffnung vorhanden sein, welches das Eindringen eines Objektes in die Zugriffsöffnung detektieren kann, wenn keine Behälterhalterung unterhalb der Zugriffsöffnung angeordnet ist.

Um ein fehlerhaftes Auslösen der Auslösevorrichtung zu vermeiden, kann ein Lichtgitter unterhalb der Behälterhalterung abschaltbar sein, wenn die Behälterhalterung unter der Zugriffsöffnung angeordnet ist oder gerade die Position unterhalb der Zugriffsöffnung einnimmt. In diesem Zustand ist dann nur der verschiebliche Alarmgeber aktiv, sofern vorhanden.

Die Erfindung betrifft außer der Kommissioniervorrichtung der oben beschriebenen Art ein Lagersystem mit wenigstens einer automatischen Bestückungsstelle und wenigstens einem Kommissionierungsarbeitsplatz, das dadurch gekennzeichnet ist, dass das Lagersystem zwischen der wenigstens einen automatischen Bestückungsstelle und dem wenigstens einen Kommissionierungsarbeitsplatz eine Kommissioniervorrichtung der oben beschriebenen Art aufweist.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei den beschriebenen Ausführungsformen weggelassen, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine perspektivische Darstellung einer Ausführungsform einer erfindungsgemäßen Kommissioniervorrichtung;
- Fig. 2: eine Seitenansicht der in Fig. 1 dargestellten Ausführungsform;
- Fig. 3: ein Anwendungsbeispiel einer erfindungsgemäßen Kommissioniervorrichtung in einem erfindungsgemäßen Lagersystem;
- Fig. 4: eine Seitenansicht des Lagersystems aus Fig. 3;
- Fig. 5: ein Lagersystem mit einer zweiten Ausführungsform einer erfindungsgemäßen Kommissioniervorrichtung;
- Fig. 6: eine perspektivische Darstellung eines Teil eines erfindungsgemäßen Gehäuses im Bereich der Zugriffsöffnung.

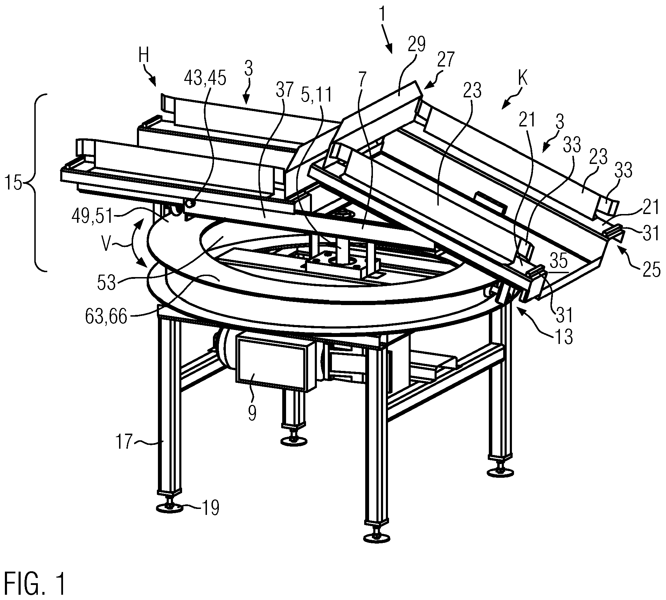

Fig. 1 zeigt eine perspektivische Ansicht einer erfindungsgemäßen Kommissioniervorrichtung 1. Die dargestellte Ausführungsform der erfindungsgemäßen Kommissioniervorrichtung 1 weist zwei Behälterhalterungen 3 auf. Die Ausführungsform mit zwei Behälterhalterungen 3 ist lediglich beispielhaft. Die erfindungsgemäße Kommissioniervorrichtung 1 kann auch nur eine einzige Behälterhalterung 3 oder mehr als zwei Behälterhalterungen 3 aufweisen.

Die Behälterhalterungen 3 sind entlang des Verfahrweges V beweglich. Sie können durch die Rotationseinrichtung 5 bewegt werden. Die Rotationseinrichtung 5 kann über einen Drehtisch 7 verfügen, welcher die beiden Behälterhalterungen 3 hält. Zur Rotationseinrichtung 5 kann ebenfalls eine Antriebseinheit 9 gehören, welche beispielsweise durch einen Elektromotor gebildet sein kann und besonders vorteilhaft unterhalb des Drehtisches 7 angeordnet ist. Der Drehtisch 7 ist bevorzugt auf einer vertikalen Drehtischachse 11 angeordnet, welche mit der Antriebseinheit 9 verbunden ist. Die Verbindung der Drehtischachse 11 mit der Antriebseinheit 9 kann starr oder über ein Getriebe erfolgen.

Die Kommissioniervorrichtung 1 weist eine Kippvorrichtung 13 für die Behälterhalterungen 3 auf. Die Kippvorrichtung 13 dient zum Kippen der Behälterhalterungen 3 bei einer Bewegung entlang des Verfahrweges V. In Fig. 1 ist eine der Behälterhalterungen 3 in einer nicht gekippten, horizontalen Position H und die zweite Behälterhalterung 3 in einer gekippten Position K dargestellt. Die Kommissioniervorrichtung 1 wird bevorzugt so angeordnet, dass die horizontale Position H auf einer Seite der Kommissioniervorrichtung 1 eingenommen wird, welche zu einer automatischen Bestückungsstelle hinweist und die gekippte Position K auf einer Seite eingenommen wird, an der ein Kommissionierungsarbeitsplatz angeordnet ist. In der gekippten Position K ist die Behälterhalterung 3 bzw. ein in ihr gezeigter Behälter (nicht dargestellt) für eine Bedienperson besonders einfach zugänglich. Dadurch kann die Zeit für die Kommissionierung verringert und es können eventuelle Gesundheitsgefahren für die Bedienperson verringert werden.

Die Kommissioniervorrichtung 1 mit der Rotationseinrichtung 5, dem Drehtisch 7, den Behälterhalterungen 3 und der Kippvorrichtung 13 bilden zusammen bevorzugt eine Baueinheit 15. Die Baueinheit 15 kann separat hergestellt werden und auch nachträglich bei Lagersystemen nachgerüstet werden. Die Baueinheit 15 kann zudem transportierbar gestaltet sein. Zur Baueinheit 15 kann auch die Antriebseinheit 9 gehören. Die Komponenten der Baueinheit 15 können auf einem Gestell 17 angeordnet und von diesem getragen sein. Das Gestell 17 kann, wie in Fig. 1 gezeigt, Standfüße 19 aufweisen. Dies ist jedoch nur als Beispiel dargestellt. Alternativ dazu kann das Gestell 17 auch auf Rollelementen stehen, um die Position der Kommissioniervorrichtung 1 schnell ändern zu können. Ebenso ist es möglich, dass die Kommissioniervorrichtung 1 auf einem bestehenden Teil eines Lagersystems beispielsweise der Bestückungsstelle montiert ist.

Im Folgenden ist der Aufbau der Behälterhalterungen 3 mit Bezug auf die in Fig. 1 dargestellte Behälterhalterung 3 in der gekippten Position K beschrieben. Die Behälterhalterung 3 besitzt zwei voneinander beabstandete Tragschienen 21, welche zum Tragen eines Behälters dienen. Zur seitlichen Führung eines Behälters ist jede Tragschiene 21 mit einer Führungsschiene 23 verbunden. Die Führungsschienen 23 sind dabei an den äußeren Enden der Tragschienen 21 befestigt, so dass die Tragschienen 21 nicht durch die Führungsschienen 23 verdeckt sind. Jede Behälterhalterung 3 besitzt ein zugangsseitiges Ende 25 und ein rückseitiges Ende 27. Am zugangsseitigen Ende 25 können Behälter in die Behälterhalterung 3 eingeführt und aus dieser entnommen werden. Das zugangsseitige Ende 25 ist deshalb offen gestaltet. Am rückseitigen Ende 27 weist die Behälterhalterung 3 eine Rückwand 29 auf, welche eine Bewegung eines Behälters über das rückseitige Ende 27 hinaus verhindern kann.

Um ein Abrutschen eines Behälters von den Tragschienen 21, insbesondere in der gekippten Position K, zu verhindern, weist jede Tragschiene 21 an ihrem zugangsseitigen Ende 25 einen Anschlag 31 auf. Die Anschläge 31 sind so gestaltet, dass ein Behälter beim Einführen in die Behälterhalterung 3 und bei der Entnahme aus dieser leicht über die Anschläge 31 hinweg gehoben werden kann.

Zum erleichterten Einschieben eines Behälters in die Behälterhalterung 3 weisen die Führungsschienen 23 Führungsorgane 33 auf, welche zum zugangsseitigen Ende 25 hin von der Behälterhalterung 3 weggespreizt sind. Die zwei Führungsorgane 33 am zugangsseitigen Ende 25 sind sich gegenüberliegend angeordnet. So kann ein Behälter beim Einschieben in die Behälterhalterung 3 von den Führungsorganen 33 in Empfang genommen und zu den Führungsschienen 23 hin geführt werden.

Die Führungsschienen 23 weisen bevorzugt auch am rückseitigen Ende 27 Führungsorgane 33 auf. Im montierten Zustand erfüllen diese Führungsorgane 33 dann keine Funktion. Jedoch können die Führungsschienen 23 so produziert werden, dass sie auf beiden Seiten der Behälterhalterung 3 verwendet werden können. Auf die Anfertigung von Führungsschienen 23, die jeweils nur an eine Seite der Behälterhalterung 3 passen, kann daher verzichtet werden.

In einem eingesetzten Zustand ist ein Behälter in der Behälterhalterung (3) vorzugsweise seitlich von den Führungsschienen (23), durch die Rückwand 29 und an einer Unterseite durch die Tragschienen 21 gehalten. Dadurch kann vermieden werden, dass ein Behälter bei einer Bewegung der Behälterhalterung 3 entlang des Verfahrweges V und bei einer Kippung aus der Behälterhalterung 3 rutscht.

Um einen Behälter, insbesondere an einer automatischen Bestückungsstelle besonders einfach in eine Behälterhalterung 3 einzusetzen oder aus dieser herauszunehmen, weist die Behälterhalterung 3 einen Unterfahrraum 35 auf. Der Unterfahrraum 35 ist unterhalb der Tragschienen 21 angeordnet und zum zugangsseitigen Ende 25 der Behälterhalterung 3 hin offen. Der Unterfahrraum 35 erlaubt es Trageinrichtungen wie z.B. Zinken oder Schienen einer automatischen Bestückungsstelle oder einer Transportvorrichtung in die Behälterhalterung 3 einzudringen, um einen Behälter auf den Tragschienen 21 abzusetzen oder von diesen anzuheben.

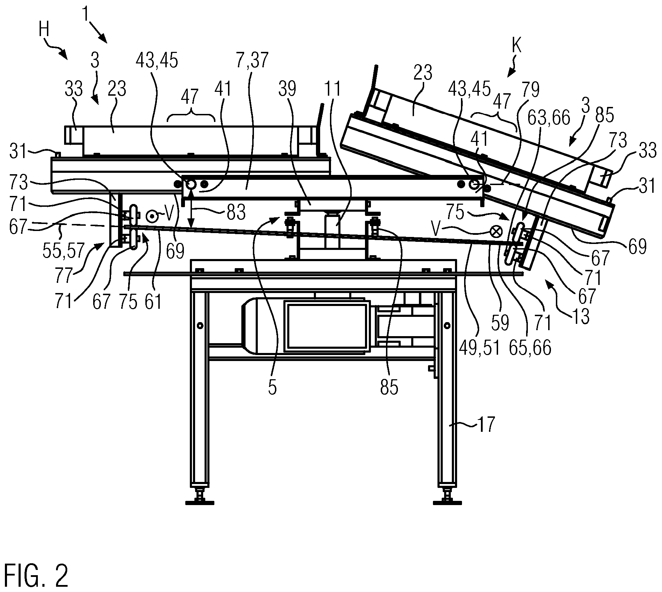

Im Folgenden sind der Aufbau der Kippvorrichtung 13 und weitere Elemente der Kommissioniervorrichtung 1 mit Bezug auf die Fig. 1 und 2 näher beschrieben. Der Drehtisch 7 der Rotationseinrichtung 5 weist die Horizontalträger 37 auf. Die Horizontalträger 37 bilden im Wesentlichen den Drehtisch 7. Die Horizontalträger 37 sind voneinander beabstandet und mittig mit der Drehtischachse 11 verbunden. Zur Verbindung mit der Drehtischachse 11 weist der Drehtisch 7 einen Querträger 39 auf, welcher direkt mit der Drehtischachse 11 verbunden ist, und auf dem die Horizontalträger 37 angeordnet sind. An ihren Enden 41 weisen die Horizontalträger 37 Halteeinrichtungen 43 für die Behälterhalterungen 3 auf. Die Halteeinrichtungen 43 tragen die Behälterhalterungen 3.

Die Behälterhalterungen 3 sind kippbar über die Halteeinrichtungen 43 mit den Horizontalträgern 37 verbunden. Die Halteeinrichtungen 43 fallen bevorzugt mit den Kippachsen 45 der Behälterhalterungen zusammen. Die Kippachsen 45 bzw. Halteeinrichtungen 43 sind bevorzugt in den mittleren Bereichen 47 der Behälterhalterungen 3 angeordnet. Dadurch kann ein Großteil der Last der Behälterhalterungen 3 und der darin enthaltenen Behälter über die Halteeinrichtung 43 von dem Drehtisch 7 aufgenommen werden.

Durch die Kippvorrichtung 13 sind die Behälterhalterungen 3 bei einer Bewegung entlang des Verfahrweges V zu einem Kommissionierungsarbeitsplatz (nicht gezeigt) hin kippbar. Im gekippten Zustand nimmt eine Behälterhalterung 3 die gekippte Position K ein. Die Kippvorrichtung 13 weist die mechanische Führung 49 auf. Die mechanische Führung 49 ist bevorzugt durch eine Ringscheibe 51 gebildet. Die Ringscheibe 51 weist die Scheibenöffnung 53 auf. Durch die Scheibenöffnung 53 kann die Rotationseinrichtung 5 insbesondere mit der Drehtischachse 11 ragen.

Die Ringscheibe 51 spannt eine Ringscheibenebene 55 auf, welche im Wesentlichen horizontal verläuft, dabei jedoch soweit angeschrägt angeordnet ist, dass sie eine schiefe Ebene 57 bildet. In einem Zustand, in dem die Kommissioniervorrichtung 1 zwischen einer Bestückungsstelle und einem Kommissionierungsarbeitsplatz angeordnet ist, weist das vertikal tiefer liegende Ende 59 der Ringscheibe 51 bevorzugt zum Kommissionierungsarbeitsplatz und das vertikal höher liegende Ende 61 zur automatischen Bestückungsstelle.

Alternativ zur Ausgestaltung als Ringscheibe 51, deren Ringscheibenebene 55 eine schiefe Ebene 57 bildet, sind auch andere Ausgestaltungen der mechanischen Führung möglich. Beispielsweise kann die mechanische Führung 49 auch aus einer Ringscheibe bestehen, die in einem Bereich, in dem eine Behälterhalterung 3 die horizontale Position H einsehen soll, horizontal ausgerichtet ist und nur im Bereich, in dem die wenigstens eine Behälterhalterung 3 die gekippte Position K einnehmen soll, von der Horizontallage abweicht. Ebenso ist es möglich, dass die mechanische Führung 49 durch ein Schienensystem gebildet ist.

Die mechanische Führung 49 ist entlang des Verfahrweges V bevorzugt durchgängig und glatt gebildet. Die mechanische Führung 49 bildet eine obere Laufbahn 63 und eine untere Laufbahn 65 für Rollen 67. Ist die mechanische Führung 49 durch eine Ringscheibe 51 gebildet, so formen die Flachseiten 66 der Ringscheibe 51 die Laufbahnen 63 und 65. Die Rollen 67 sind drehbar an den Behälterhalterungen 3 gehalten. Jede Behälterhalterung 3 weist bevorzugt wenigstens zwei Rollen 67 auf. Die Rollen 67 sind an Unterseiten 69 der Behälterhalterungen 3 angeordnet. Die Rollen 67 sind jeweils von den Kippachsen 45 der Behälterhalterungen 3 horizontal beabstandet. In einer horizontalen Richtung liegen sie weiter von der Drehtischachse 11 beabstandet als die Kippachsen 45. Die Rollen 67 sind an den jeweiligen Behälterhalterungen 3 bevorzugt so angeordnet, dass ihre Rollendrehachsen 71 parallel zur Unterseite 69 verlaufen und in Richtung der Drehtischachse 11 weisen. Die Rollendrehachsen 71 sind bevorzugt an Auslegern 73 an den Unterseiten 69 der Behälterhalterungen 3 gehalten und durch diese von den Unterseiten 69 beabstandet.

Jede Behälterhalterung 3 weist bevorzugt wenigstens ein Paar 75 von Rollen 67 auf, wobei je eine Rolle 67 eines Rollenpaares 75 oberhalb und eine Rolle 67 unterhalb der mechanischen Führung 49 angeordnet ist. Dadurch ist die mechanische Führung 49 zwischen zwei Rollen 67 eines Rollenpaares 75 angeordnet. Bevorzugt liegen sich die zwei Rollen 67 eines Rollenpaares 75 dabei vertikal gegenüber. Alternativ dazu kann eine Behälterhalterung 3 auch ein System aus drei Rollen aufweisen, wobei je zwei Rollen oberhalb oder unterhalb der mechanischen Führung 49 angeordnet sind und eine dritte Rolle auf der vertikal gegenüberliegenden Seite der mechanischen Führung 49. Bevorzugt weist jedoch jede Behälterhalterung 3 zwei Rollenpaare 75 auf.

Im Folgenden ist die Funktion der erfindungsgemäßen Kommissioniervorrichtung 1 beschrieben. Ist eine Behälterhalterung 3 in der horizontalen Position H angeordnet und wird sie entlang des Verfahrweges V durch eine Rotation der Rotationseinrichtung 5 bewegt, so bewegen sich die Rollen 67 der Behälterhalterung 3 entlang der oberen Laufbahn 63 und der unteren Laufbahn 65. Da die mechanische Führung 49 zwischen den Rollen 67 angeordnet ist, folgen die Rollen 67 dem Verlauf der mechanischen Führung 49.

Das System aus Rollen 67 und mechanischer Führung 49 bildet eine Zwangsführung 77 der Kippvorrichtung 13. Da die mechanische Führung 49 entlang einer schiefen Ebene 57 verläuft, die vertikale Position 79 der Kippachsen 45 jedoch unverändert bleibt, weil die Horizontalträger 37 des Drehtisches 7 bei einer Rotation der Rotationseinrichtung 5 in ihrer horizontalen Ebene verbleiben, wird ein Zug auf die Behälterhalterung 3 ausgeübt, wenn die Rollen 67 entlang des Verfahrweges V in Richtung des vertikal tiefer liegenden Endes 59 bewegt werden. Dieser vertikal nach unten gerichtete Zug auf die Behälterhalterung 3 wird dadurch ausgeglichen, dass die Behälterhalterung 3 der mechanischen Führung folgt, indem sie um die Kippachse 45 nach unten gekippt wird. Eine Rotation in umgekehrter Richtung führt dazu, dass die Behälterhalterung 3 wieder in die horizontale Position H zurückbewegt wird. Eine Bewegung entlang des Verfahrweges V bewegt die Behälterhalterung 3 am vertikal höher liegenden Ende 61 der mechanischen Führung 49 also in die horizontale Position H und am vertikal tiefer liegenden Ende 59 in die gekippte Position K.

Um an mehreren Stellen des Verfahrweges V gekippte Positionen K und/oder horizontale Positionen H zu erreichen, kann die mechanische Führung 49 anstatt eines ebenen Verlaufs auch einen kurvenförmigen Verlauf aufweisen, so dass die Behälterhalterung 3 bei einer Bewegung entlang des Verfahrweges V diesem kurvenförmigen Verlauf durch Kippungen folgt.

Zusammenfassend lässt sich also sagen, dass die Kippvorrichtung 13 eine Kurvensteuerung 81 für die Verkippung der wenigstens einen Behälterhalterung 3 darstellt. Dabei bestimmt der vertikale Abstand 83 zwischen der mechanischen Führung 49 und der Kippachse 45 das Ausmaß für die Kippung der Behälterhalterung 3. Um das Ausmaß der Verkippung der Behälterhalterung 3 schnell einstellen zu können, kann die mechanische Führung 49 einen Verstellmechanismus 85 aufweisen, durch den die Schräglage der schiefen Ebene 57 veränderbar ist. Der Verstellmechanismus 85 kann beispielsweise durch Verstellschrauben gebildet sein.

Da sich bei einer Verkippung der Behälterhalterung 3 auch die Rollen 67 auf den Laufbahnen 63 und 65 kippen, weisen die Rollen 67 bevorzugt abgerundete Profile 87 auf. Um die Kommissioniervorrichtung 1 kompakt gestalten zu können, ist die mechanische Führung 49 unterhalb der Behälterhalterungen 3 angeordnet.

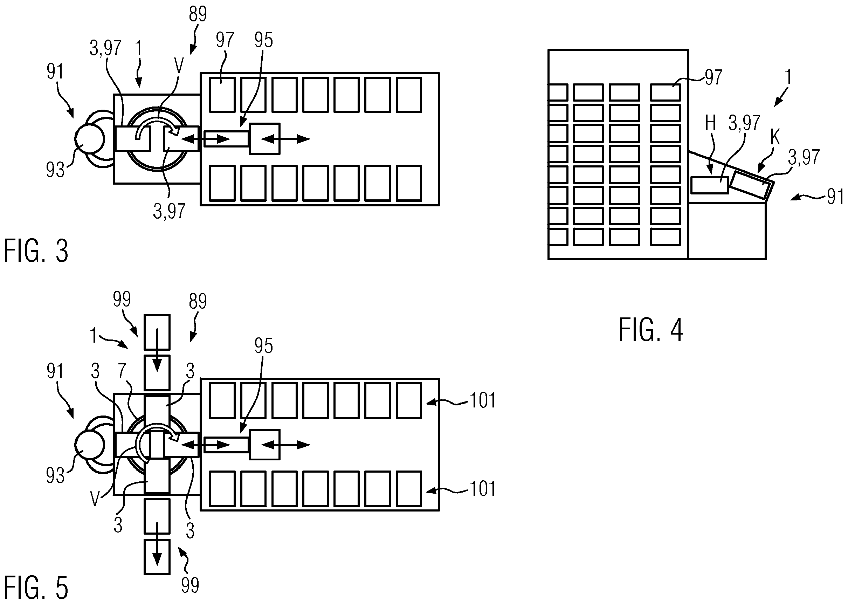

Fig. 3 zeigt schematisch die Draufsicht einer ersten Ausführungsform eines erfindungsgemäßen Lagersystems 89 und Fig. 4 eine schematische Seitenansicht derselben Ausführungsform. Zum Lagersystem 89 gehört ein Kommissionierungsarbeitsplatz 91 für wenigstens eine Bedienperson 93 und eine automatische Bestückungsstelle 95. Die automatische Bestückungsstelle 95 kann Teil eines Regalliftsystems sein. Die Kommissioniervorrichtung 1 ist zwischen der automatischen Bestückungsstelle 95 und dem Kommissionierungsarbeitsplatz 91 angeordnet.

In der ersten dargestellten Ausführungsform weist die erfindungsgemäße Kommissioniervorrichtung 1 zwei Behälterhalterungen 3 auf, die mit jeweils eingesetzten Behältern 97 dargestellt sind. Ein Vorteil der erfindungsgemäßen Kommissioniervorrichtung 1 bzw. des erfindungsgemäßen Lagersystems 89 ist nun der, dass die Bedienperson 93 am Kommissionierungsarbeitsplatz 91 auf einen Behälter 97 zugreifen kann, während der zweite Behälter 97 von der Bestückungsstelle 95 bestückt wird. Gleichzeitig führt die Kippvorrichtung dazu, dass der zum Kommissionierungsarbeitsplatz 91 weisende Behälter 97 für einen erleichterten Zugriff durch die Bedienperson 93 zum Kommissionierungsarbeitsplatz 91 hin gekippt ist. Der Behälter 97, welcher zur Bestückungsstelle 95 weist, ist dagegen horizontal ausgerichtet, so dass die automatische Bestückungsstelle 95 den Behälter 97 leicht aus der Behälterhalterung 3 entnehmen und durch einen neuen Behälter 97 ersetzen kann.

Fig. 5 zeigt eine zweite Ausführungsform eines erfindungsgemäßen Lagersystems 89 mit einer zweiten Ausführungsform einer erfindungsgemäßen Kommissioniervorrichtung 1. Die zweite Ausführungsform der Kommissioniervorrichtung 1 weist vier Behälterhalterungen 3 auf. Die vier Behälterhalterungen 3 sind kreuzförmig auf einem Drehtisch 7 der Kommissioniervorrichtung 1 angeordnet. Das Lagersystem 89 der zweiten Ausführungsform weist zudem zwei Transporteinrichtungen 99 auf, welche zusätzlich zum Kommissionierungsarbeitsplatz 91 und der automatischen Bestückungsstelle 95 mit der Kommissioniervorrichtung 1 in Verbindung stehen. Die zweite Ausführungsform kann dafür genutzt werden, Behälter 97 nicht nur zwischen dem Kommissionierungsarbeitsplatz 91 und der Bestückungsstelle 95 zu bewegen, sondern auch Behälter von einer Transporteinrichtung 99 auf eine freie Behälterhalterung 3 oder von einer Behälterhalterung 3 weg zu bewegen.

Eine mögliche Anwendung könnte folgendermaßen aussehen: Neue Behälter mit Gütern werden über eine der Transporteinrichtungen 99 der Kommissioniervorrichtung 1 zugeführt und auf eine freie Behälterhalterung 3 gesetzt. Eine Rotation der Rotationseinrichtung 5 der Kommissioniervorrichtung 1 kann diesen neuen Behälter 97 zur Bestückungsstelle 95 bewegen. Die Bestückungsstelle 95 kann diesen neuen Behälter dann in das Regalsystem einlagern bis der Inhalt des Behälters 97 benötigt wird. Durch die Bestückungsstelle 95 können wie bei der ersten Ausführungsform Behälter 97 zur Kommissionierung auf eine freie Behälterhalterung 3 gesetzt werden, um diese zum Kommissionierungsarbeitsplatz 91 zu bewegen. Der Inhalt eines Behälters 97 kann dann von der Bedienperson 93 kommissioniert werden. Ein fertig kommissionierter Behälter 97 oder beispielsweise ein leerer Behälter 97 kann dann von einer der Transportvorrichtungen 99 abtransportiert werden. Durch die Ausgestaltung mit den zusätzlichen Transporteinrichtungen 99 ist eine größtmögliche Flexibilität bei der Verwaltung von Gütern und bei der Kommissionierung gegeben.

Alternativ dazu kann das Lagersystem 89 auch nur eine Transporteinrichtung 99 oder mehr als zwei Transporteinrichtungen 99 aufweisen. Ebenso kann die Kommissioniervorrichtung 1 eine beliebige Anzahl an Behälterhalterungen 3 aufweisen.

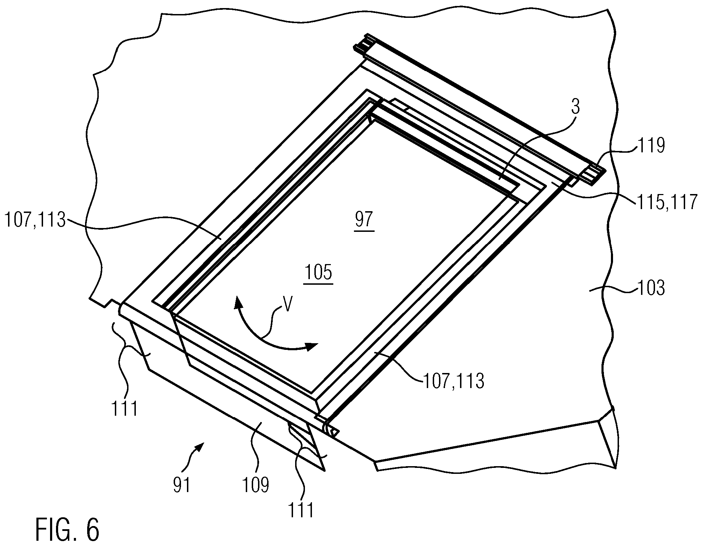

Fig. 6 zeigt einen Ausschnitt eines erfindungsgemäßen Gehäuses 103. Das Gehäuse kann die Komponenten der Kommissioniervorrichtung 1, insbesondere den Drehtisch 7 mit den Behälterhalterungen 3 wenigstens abschnittsweise umgeben, so dass nur im Bereich des Kommissionierungsarbeitsplatzes 91 ein Zugriff auf einen in der Behälterhalterung 3 gehaltenen Behälter 97 möglich ist. Das Gehäuse 103 weist dazu eine Zugriffsöffnung 105 auf. Das Gehäuse 103 kann die Sicherheit für eine Bedienperson (nicht gezeigt) erhöhen, da ein Zugriff auf die beweglichen Teile der Kommissioniervorrichtung 1 verhindert wird. Im Bereich der Zugriffsöffnung 105 ist jedoch ein Zugriff auf das Innere des Gehäuses 103 möglich.

Um die Gefahr von Verletzungen einer Bedienperson bei einem Hineingreifen in die Zugriffsöffnung 105 beispielsweise durch das Einklemmen einer Hand zwischen einem sich bewegenden Behälter 97 bzw. einer Behälterhalterung 3 und dem Gehäuserand 107 zu verringern, weist das Gehäuse 103 eine Auslösevorrichtung 109 auf. Die Auslösevorrichtung 109 ist dazu ausgestaltet, ein Stoppsignal zum Anhalten der wenigstens einen Behälterhalterung 3 zu erzeugen. Dazu kann die Auslösevorrichtung 109 eine Steuer- und Kontrolleinheit (nicht gezeigt) aufweisen. Das Stoppsignal kann insbesondere die Rotation der Rotationseinrichtung 5 anhalten.

Die Auslösevorrichtung 109 weist zwei Auslösebereiche 111 an den seitlichen Rändern 113 der Zugriffsöffnung 105 auf. Innerhalb der Auslösebereiche 111 kann detektiert werden, ob ein Objekt wie beispielsweise eine Hand zwischen einem einfahrenden Behälter 97 und dem Rand 113 der Zugriffsöffnung bzw. dem Gehäuserand 107 angeordnet ist. Beispielsweise kann der Auslösebereich 111 durch eine Lichtschranke abgetastet werden.

Bevorzugt ist im Auslösebereich 111 ein verschieblicher Alarmgeber 115 angeordnet. Der Alarmgeber 115 ist bevorzugt als Rahmen 117 ausgestaltet, der den Rand 113 der Zugriffsöffnung 105 umgibt. Der Rahmen 117 ist verschieblich in einer Schiene 119 gehalten, welche tangential zum Verfahrweg V verläuft. Gerät beispielsweise ein Objekt in die Zugriffsöffnung 105 bevor eine Gehäusehalterung 3 ihre Position unterhalb der Zugriffsöffnung 105 eingenommen hat und wird dann die Behälterhalterung 3 entlang des Verfahrweges V in Richtung des Kommissionierungsarbeitsplatzes 91 bewegt, so wird ein in der Zugriffsöffnung 105 angeordnetes Objekt wie beispielsweise eine Hand durch die Behälterhalterung 3 in Richtung eines Randes 113 der Zugriffsöffnung 105 verschoben. Trifft das Objekt dann auf den verschieblichen Alarmgeber 115 bzw. den Rahmen 117, so wird der bewegliche Rahmen 117 entlang der Schiene 119 verschoben. Diese Bewegung kann zur Erzeugung des Stoppsignals von der Auslösevorrichtung detektiert werden. Ein weiterer Vorteil der Verwendung eines verschieblichen Rahmens 117 ist der, dass sich der Rahmen 117, solange die Behälterhalterung 3 noch ein in der Zugriffsöffnung 105 befindliches Objekt verschiebt, mit bewegt. Dadurch wird vermieden, dass ein Objekt direkt zwischen dem Gehäuserand 107 und der Behälterhalterung 3 eingeklemmt wird.

### Bezugszeichenliste

- 1: Kommissioniervorrichtung
- 3: Behälterhalterung
- 5: Rotationseinrichtung
- 7: Drehtisch
- 9: Antriebseinheit
- 11: Drehtischachse
- 13: Kippvorrichtung
- 15: Baueinheit
- 17: Gestell
- 19: Standfüße
- 21: Tragschiene
- 23: Führungsschiene
- 25: zugangsseitiges Ende
- 27: rückseitiges Ende
- 29: Rückwand
- 31: Anschlag
- 33: Führungsorgan
- 35: Unterfahrraum
- 37: Horizontalträger
- 39: Querträger
- 41: Ende
- 43: Halteeinrichtung
- 45: Kippachse
- 47: mittlerer Bereich
- 49: mechanische Führung
- 51: Ringscheibe
- 53: Scheibenöffnung
- 55: Ringscheibenebene
- 57: schiefe Ebene
- 59: vertikal tiefer liegendes Ende
- 61: vertikal höher liegendes Ende
- 63: obere Laufbahn
- 65: untere Laufbahn
- 66: Flachseiten
- 67: Rollen
- 69: Unterseite
- 71: Rollendrehachsen
- 73: Ausleger
- 75: Rollenpaar
- 77: Zwangsführung
- 79: vertikale Position
- 81: Kurvensteuerung
- 83: vertikaler Abstand
- 85: Verstellmechanismus
- 87: Rollenprofile
- 89: Lagersystem
- 91: Kommissionierungsarbeitsplatz
- 93: Bedienperson
- 95: Bestückungsstelle
- 97: Behälter
- 99: Transporteinrichtung
- 101: Regalsystem
- 103: Gehäuse
- 105: Zugriffsöffnung
- 107: Gehäuserand
- 109: Auslösevorrichtung
- 111: Auslösebereich
- 113: Rand
- 115: Alarmgeber
- 117: Rahmen
- 119: Schiene

- H: horizontale Position
- K: gekippte Position
- V: Verfahrweg

## Patentansprüche

1. Kommissioniervorrichtung (1) zur Anordnung zwischen wenigstens einer automatischen Bestückungsstelle (95) und wenigstens einem Kommissionierungsarbeitsplatz (91), mit wenigstens einer entlang eines Verfahrweges (V) von dem wenigstens einen Kommissionierungsarbeitsplatz (91) zu der wenigstens einen Bestückungsstelle (95) hin beweglichen Behälterhalterung (3), und mit einer Rotationseinrichtung (5) zur Bewegung der wenigstens einen Behälterhalterung (3) entlang des Verfahrweges (V), wobei die Kommissioniervorrichtung (1) eine Kippvorrichtung (13) für die wenigstens eine Behälterhalterung (3) aufweist, durch die die wenigstens eine Behälterhalterung (3) bei einer Bewegung entlang des Verfahrweges (V) zum wenigstens einen Kommissionierungsarbeitsplatz (91) hin kippbar ist, wobei die Kippvorrichtung (13) eine mechanische Führung (49) für die wenigstens eine Behälterhalterung (3) entlang des Verfahrweges (V) aufweist, und wobei der Verfahrweg (V) in sich geschlossen ist, und wobei die Kippvorrichtung (13) eine Zwangsführung (77) für die wenigstens eine Behälterhalterung (3) aufweist, die den Verfahrweg (V) für die wenigstens eine Behälterhalterung (3) vorgibt und durch die die Kippbewegung der wenigstens einen Behälterhalterung (3) bei einer Rotation der Rotationseinrichtung (5) auslösbar ist, **dadurch gekennzeichnet, dass** die wenigstens eine Behälterhalterung (3) eine Kippachse (45) aufweist, die horizontal von der mechanischen Führung (49) beabstandet ist.

2. Kommissioniervorrichtung (1) nach Anspruch 1, **dadurch gekennzeichnet, dass** wenigstens zwei Behälterhalterungen (3) bezüglich einer Verschiebung entlang des Verfahrweges (V) bewegungsstarr miteinander gekoppelt sind.

3. Kommissioniervorrichtung (1) nach Anspruch 1 oder 2, **dadurch gekennzeichnet, dass** entlang des Verfahrweges (V) eine Kurvensteuerung (81) für die Erzeugung der Kippbewegung der wenigstens einen Behälterhalterung (3) vorhanden ist.

4. Kommissioniervorrichtung (1) nach einem der Ansprüche 1 bis 3, **dadurch gekennzeichnet, dass** eine vertikale Position (79) der Kippachse (45) bei einer Bewegung der Behälterhalterung (3) entlang des Verfahrweges (V) unveränderlich ist.

5. Kommissioniervorrichtung (1) nach einem der Ansprüche 1 bis 4, **dadurch gekennzeichnet, dass** die wenigstens eine Behälterhalterung (3) kippbar von einem Drehtisch (7) der Rotationseinrichtung (5) gehalten ist.

6. Kommissioniervorrichtung (1) nach einem der Ansprüche 1 bis 5, **dadurch gekennzeichnet, dass** die mechanische Führung (49) wenigstens abschnittsweise entlang einer schiefen Ebene (57) ausgerichtet ist.

7. Kommissioniervorrichtung (1) nach einem der Ansprüche 1 bis 6, **dadurch gekennzeichnet, dass** die mechanische Führung (49) band- oder scheibenförmig ist, wobei Flachseiten (66) der mechanischen Führung (49) im Wesentlichen horizontal ausgerichtet sind.

8. Kommissioniervorrichtung (1) nach einem der Ansprüche 1 bis 7, **dadurch gekennzeichnet, dass** wenigstens zwei Behälterhalterungen (3) vorgesehen sind.

9. Kommissioniervorrichtung (1) nach einem der Ansprüche 1 bis 8, **dadurch gekennzeichnet, dass** ein Gehäuse (103) vorhanden ist, das nur im Bereich des Kommissionierungsarbeitsplatz (91) den Zugriff auf einen in der Behälterhalterung (3) gehaltenen Behälter (97) durch eine Zugriffsöffnung (105) freigibt.

10. Kommissioniervorrichtung (1) nach Anspruch 9, **dadurch gekennzeichnet, dass** das Gehäuse (103) eine Auslösevorrichtung (109) zum Anhalten der wenigstens einen Behälterhalterung (3) aufweist, wobei die Auslösevorrichtung (109) wenigstens einen Alarmgeber (115) in Form einer Sensoreinheit aufweist, der wenigstens einen Auslösebereich (111) an wenigstens einem Rand (113) der Zugriffsöffnung (105) überwacht.

11. Kommissioniervorrichtung (1) nach Anspruch 10, **dadurch gekennzeichnet, dass** die wenigstens eine Auslösevorrichtung (109) wenigstens einen verschieblichen Alarmgeber (115) aufweist.

12. Lagersystem (89) mit wenigstens einer automatischen Bestückungsstelle (95) und wenigstens einem Kommissionierungsarbeitsplatz (91), **dadurch gekennzeichnet, dass** das Lagersystem (89) zwischen der wenigstens einen automatischen Bestückungsstelle (95) und dem wenigstens einen Kommissionierungsarbeitsplatz (91) eine Kommissioniervorrichtung (1) nach einem der Ansprüche 1 bis 11 aufweist.

## Claims

1. Picking device (1) for arranging between at least one automatic placement point (95) and at least one picking workstation (91), comprising at least one container holder (3) movable along a travel path (V) from the at least one picking workstation (91) to the at least one placement point (95), and comprising a rotation unit (5) for moving the at least one container holder (3) along the travel path (V), wherein the picking device (1) has a tilt device (13) for the at least one container holder (3), by means of which the at least one container holder (3) can be tilted toward the at least one picking workstation (91) during a movement along the travel path (V), wherein the tilt device (13) has a mechanical guidance (49) for the at least one container holder (3) along the travel path (V), wherein the travel path (V) is self-contained, and wherein the tilt device (13) has a forced guidance (77) for the at least one container holder (3), that specifies the travel path (V) for the at least one container holder (3) and by means of which the tilting movement of the at least one container holder (3) can be triggered during a rotation of the rotation unit (5), **characterized in that** the at least one container holder (3) has a tilting axis (45), which is spaced apart horizontally from the mechanical guidance (49).

2. Picking device (1) according to claim 1, **characterized in that** at least two container holders (3) are rigidly coupled with one another with respect to a displacement along the travel path (V).

3. Picking device (1) according to claim 1 or 2, **characterized in that** along the travel path (V), a cam control (81) is provided to generate the tilting movement of the at least one container holder (3).

4. Picking device (1) according to c one of the claims 1 to 3, **characterized in that** a vertical position (79) of the tilting axis (45) remains unchanged during a movement of the container holder (3) along the travel path (V).

5. Picking device (1) according to one of the claims 1 to 4, **characterized in that** the at least one container holder (3) is tiltably held by a rotary table (7) of the rotation unit (5).

6. Picking device (1) according to one of the claims 1 to 5, **characterized in that** the mechanical guidance (49) is at least in sections aligned along an inclined plane (57).

7. Picking device (1) according to one of the claims 1 to 6, **characterized in that** the mechanical guidance (49) is belt-shaped or disk-shaped, wherein the flat sides (66) of the mechanical guidance (49) are essentially aligned horizontally.

8. Picking device (1) according to one of the claims 1 to 7, **characterized in that** at least two container holders (3) are provided.

9. Picking device (1) according to one of the claims 1 to 8, **characterized in that** a housing (103) is provided, which allows access to one of the containers (97) held in the container holder (3) through an access opening (105) only in the area of the picking workstation (91).

10. Picking device (1) according to claim 9, **characterized in that** the housing (103) has a trigger device (109) to stop the at least one container holder (3), wherein the trigger device has at least one alarm transmitter (115) in the form of a sensor unit, which monitors the at least one trigger area (111) at at least one periphery (113) of the access opening (105).

11. Picking device (1) according to claim 10, **characterized in that** the at least one trigger device (109) has at least one slidable alarm transmitter (115).

12. Storage system (89) with at least one automatic placement point (95) and at least one picking workstation (91), **characterized in that** the storage system (89) has one picking device (1) according to one of the claims 1 to 11 between the at least one automatic placement point (95) and the at least one picking workstation (91).

## Revendications

1. Dispositif de préparation de commandes (1) destiné à être agencé entre au moins un poste d'insertion automatique (95) et au moins une station de préparation de commandes (91), comprenant au moins un support de récipient (3) pouvant être déplacé le long d'un trajet de déplacement (V) à partir de la au moins une station de préparation de commandes (91) vers le au moins un poste d'insertion (95), et comprenant un appareil rotatif (5) permettant de déplacer le au moins un support de récipient (3) le long du trajet de déplacement (V), dans lequel le dispositif de préparation de commandes (1) présente un dispositif de bascule (13) destiné au au moins un support de récipient (3) et grâce auquel le au moins un support de récipient (3) peut être basculé lors d'un déplacement le long du trajet de déplacement (V) vers la au moins une station de préparation de commandes (91), dans lequel le dispositif de bascule (13) présente le long du trajet de déplacement (V) un guidage mécanique (49) destiné au au moins un support de récipient (3), et dans lequel le trajet de déplacement (V) est refermé sur lui-même, et dans lequel le dispositif de bascule (13) présente un guidage forcé (77) destiné au au moins un support de récipient (3) et définissant le trajet de déplacement (V) pour le au moins un support de récipient (3) et grâce auquel le mouvement de bascule du au moins un support de récipient (3) peut être déclenché lors d'une rotation de l'appareil rotatif (5), **caractérisé en ce que** le au moins un support de récipient (3) présente un axe de bascule (45) qui est espacé horizontalement par rapport au guidage mécanique (49).

2. Dispositif de préparation de commandes (1) selon la revendication 1, **caractérisé en ce qu'**au moins deux supports de récipient (3) sont couplés l'un à l'autre de manière rigide en termes de mouvement par rapport à un déplacement le long du trajet de déplacement (V).

3. Dispositif de préparation de commandes (1) selon la revendication 1 ou 2, **caractérisé en ce qu'**une commande par cames (81) destinée à générer le mouvement de bascule du au moins un support de récipient (3) est présente le long du trajet de déplacement (V).

4. Dispositif de préparation de commandes (1) selon l'une quelconque des revendications 1 à 3, **caractérisé en ce qu'**une position verticale (79) de l'axe de bascule (45) ne peut être modifiée lors d'un déplacement du support de récipient (3) le long du trajet de déplacement (V).

5. Dispositif de préparation de commandes (1) selon l'une quelconque des revendications 1 à 4, **caractérisé en ce que** le au moins un support de récipient (3) est maintenu par un plateau tournant (7) de l'appareil rotatif (5) de manière à pouvoir être basculé.

6. Dispositif de préparation de commandes (1) selon l'une quelconque des revendications 1 à 5, **caractérisé en ce que** le guidage mécanique (49) est orienté au moins par sections le long d'un plan oblique (57).

7. Dispositif de préparation de commandes (1) selon l'une quelconque des revendications 1 à 6, **caractérisé en ce que** le guidage mécanique (49) est réalisé sous forme de bande ou de disque, dans lequel des côtés plats (66) du guidage mécanique (49) sont orientés de manière essentiellement horizontale.

8. Dispositif de préparation de commandes (1) selon l'une quelconque des revendications 1 à 7, **caractérisé en ce qu'**au moins deux supports de récipient (3) sont prévus.

9. Dispositif de préparation de commandes (1) selon l'une quelconque des revendications 1 à 8, **caractérisé en ce qu'**un boîtier (103) est présent qui, uniquement dans la région de la station de préparation de commandes (91), donne accès, grâce à un orifice d'accès (105), à un récipient (97) maintenu dans le support de récipient (3).

10. Dispositif de préparation de commandes (1) selon la revendication 9, **caractérisé en ce que** le boîtier (103) présente un dispositif de débrayage (109) permettant de stopper le au moins un support de récipient (3), dans lequel le dispositif de débrayage (109) présente au moins une alarme (115) sous la forme d'une unité de détection qui surveille au moins une région de débrayage (111) au niveau d'au moins un bord (113) de l'orifice d'accès (105).

11. Dispositif de préparation de commandes (1) selon la revendication 10, **caractérisé en ce que** le au moins un dispositif de débrayage (109) présente au moins une alarme (115) pouvant être déplacée.

12. Système de stockage (89) comprenant au moins un poste d'insertion automatique (95) et au moins une station de préparation de commandes (91), **caractérisé en ce que** le système de stockage (89) comprend un dispositif de préparation de commandes (1) selon l'une quelconque des revendications 1 à 11 entre le au moins un poste d'insertion automatique (95) et la au moins une station de préparation de commandes (91).
